# EUROPÄISCHE PATENTSCHRIFT

(11) **EP 0 720 889 B1**
(45) Veröffentlichungstag und Bekanntmachung des Hinweises auf die Patenterteilung: **31.01.2001**
(21) Anmeldenummer: 95117156.0
(22) Anmeldetag: 31.10.1995
(51) Int. Cl.: B23Q 11/12, H02K 41/02

(54) **Werkzeugmaschine**
Machine tool
Machine outil

(30) Priorität: 19.12.1994 DE 4445283
(43) Veröffentlichungstag der Anmeldung: 10.07.1996
(73) Patentinhaber: EMAG-MASCHINEN VERTRIEBS- und SERVICE GmbH, D-73084 Salach (DE)
(72) Erfinder: Hessbrüggen, Norbert, D-73107 Eschenbach (DE); Steinbach, Heinz, D-89079 Ulm (DE)
(74) Vertreter: Zmyj, Erwin, Dipl.-Ing., Dipl.-Wirtsch.-Ing.

(56) Entgegenhaltungen:
- EP-A- 0 583 087
- DE-A- 4 217 357

## Beschreibung

Die Erfindung bezieht sich auf eine Werkzeugmaschine mit einem an einer Führungsanordnung eines Maschinenkörpers geführten Schlitten sowie einem für den Antrieb des Schlittens dienenden, runden Linearmotor, bei dem die senkrecht zur Bewegungsrichtung liegenden Wicklungen des mit Kühleinrichtung versehenen Primärteiles in Kreisform angeordnet sind und den aus einzelnen Blechscheiben zusammengesetzten, stangenförmigen Sekundärteil gleichförmig mit engem Spalt umschließen.

Eine Werkzeugmaschine dieser Art ist aus der DE-A-42 17 357 bekannt. Dort ist der Linearmotor verhältnismäßig kurz gebaut, wobei der feststehende Primärteil einen verhältnismäßig großen Durchmesser und damit eine große Stabilität aufweist. Der bewegbare Teil, der den Sekundärteil bildet, wird mittels Zapfen geführt. Dieser bekannte Linearmotor greift mit einem seiner Zapfen an dem zu verschiebenden Schlitten an, so daß dieser Linearmotor außerhalb des Schlittens ähnlich wie ein Hydraulikzylinder wirkt.

Entsprechend der EP-A-583087 kommt für jede Bewegungsrichtung ein Einzelkamm-Linearmotor zur Anwendung, wobei der Primärteil am Schlitten und der Sekundärteil am Maschinenkörper fest angeordnet ist. Der Sekundärteil liegt dabei zwischen zwei Führungen des Schlittens.

Aufgabe der Erfindung ist es, eine Änderung im Spalt zwischen dem Primärteil und dem Sekundärteil zu vermeiden.

Diese Aufgabe wird ausgehend von einer Werkzeugmaschine der im Oberbegriff des Anspruchs 1 angegebenen Art erfindungsgemäß dadurch gelöst, dass der Primärteil mit dem Schlitten fest verbunden ist, dass der Sekundärteil mit geringem Abstand zum Primärteil parallel zu der Führungsanordnung am Maschinenkörper fest angeordnet ist und daß der Sekundärteil an den Enden frei von Wärmespannungen gehalten ist.

Durch die Verbindung des Primärteiles mit dem Schlitten und die spannungsfreie Einspannung des Sekundärteiles an seinen Enden ist die Voraussetzung für einen langen Verfahrweg gegeben. Durch die zumindest für den Primärteil vorgesehene Kühleinrichtung, die in ihrer Kühlwirkung den jeweiligen Verhältnissen angepaßt werden kann, wird eine übermäßige Erwärmung des Primärteiles und damit auch eine zusätzliche Erwärmung des Sekundärteiles vermieden. Die Vermeidung der Erwärmung ist deswegen wesentlich, weil sonst Verspannungen im Sekundärteil auftreten, die zu einer Änderung des nur wenige Zehntelmillimeter betragenden Spaltes führen könnten. Eine Veränderung des Spaltes zwischen Primärteil und Sekundärteil hat aber eine Änderung der Antriebskraft zur Folge, wodurch der Antrieb ungleichförmig ausfallen könnte. Entscheidend ist die Tatsache, daß der Sekundärteil frei von Wärmespannungen gehalten ist. Treten nämlich Wärmedehnungsspannungen im Sekundärteil auf, was durch die betriebsbedingte Erwärmung unvermeidbar ist, ergeben sich hieraus Verformungen des Sekundärteiles, die wiederum zu Änderungen im Spalt zwischen dem Primärteil und dem Sekundärteil führen. Hieraus ergeben sich Änderungen in der Antriebskraft, die bereits, wie oben angegeben, für den Schlittenantrieb unerwünscht sind.

Zusätzlich zur Kühlung des Primärteiles kann bei einer bevorzugten Ausgestaltung der Erfindung eine Federanordnung vorgesehen sein, die trotz der Einspannung des Sekundärteiles an seinen beiden Enden eine Wärmedehnung des Sekundärteiles zuläßt. Diese Ausgestaltung ist dadurch gekennzeichnet, daß der Sekundärteil an einem Ende fest in einem Festlager und am anderen Ende in einem Loslager gegen die Kraft einer Federanordnung verschiebbar gehalten ist.

Wenn in weiterer Ausgestaltung der Erfindung der Primärteil innerhalb des Schlittens angeordnet ist, so wird hierdurch nicht nur eine gedrängte Bauform erzielt, sondern es wird auch der Vorteil erzielt, daß der Primärteil bei einer Umrüstung einer konventionellen Werkzeugmaschine die Mutter des Spindelantriebes ersetzt, während die Spindel selbst durch den stangenförmigen Sekundärteil zu ersetzen ist.

Eine besonders wirkungsvolle und gut regelbare Kühlung für den Primärteil ergibt sich in vorteilhafter Weiterbildung der Erfindung dadurch, daß die Kühleinrichtung für den Primärteil einen schraubenförmig die Wicklung umgebenden Kühlkanal umfaßt.

Wenn in weiterer Ausgestaltung der Erfindung auch der Sekundärteil mit einer Kühleinrichtung versehen ist, die den Sekundärteil frei von Wärmespannungen hält, so ist es möglich, den Sekundärteil an seinen beiden Enden fest einzuspannen, da durch die Kühleinrichtung die sonst zwangsläufig auftretenden Wärmedehnungen aufgrund der Wärmeabfuhr kompensiert werden können. Durch die Kühlmittelzuführung ist es möglich, entweder Wärmedehnungen exakt zu kompensieren, so daß der Sekundärteil spannungsfrei ist, oder es besteht auch die Möglichkeit, die Kühlwirkung so zu erhöhen, daß der Sekundärteil mit einer gewissen Vorspannung, das heißt unter Zugwirkung stehend, eingespannt ist. Hierdurch läßt sich die Stützlänge eines solchen Sekundärteiles gegenüber dem völlig spannungslosen Zustand noch erhöhen.

Eine besonders vorteilhafte Ausgestaltung einer Kühleinrichtung für den Sekundärteil ergibt sich in Weiterbildung der Erfindung dadurch, daß der Sekundärteil als hohle, aus Lochblechscheiben zusammengesetzte Stange ausgebildet ist, die an ihren Enden jeweils mit einem Kühlmittelzuflußanschluß bzw. einem Kühlmittelabflußanschluß versehen ist. Eine solche hohle Ausgestaltung des Sekundärteiles ermöglicht eine intensive und gut regelbare Kühlwirkung.

Die Erfindung wird anhand mehrerer Ausführungsbeispiele näher erläutert, die in der Zeichnung in schematischer Weise dargestellt sind. In dieser zeigen:
- **Figur 1:**: einen Werkzeugschlitten mit Linearführungen und Linearmotor mit fest eingespanntem Sekundärteil;
- **Figur 2:**: einen Schnitt nach der Linie II-II in Figur 1;
- **Figur 3:**: eine Schlitten- und Motoranordnung gemäß Figur 1 jedoch mit federnd eingespanntem Sekundärteil;
- **Figur 4:**: einen Längsschnitt nach der Linie IV-IV in Figur 3;
- **Figur 5:**: einen Werkzeugschlitten mit Flachführungen;
- **Figur 6:**: einen Schnitt nach der Linie VI-VI in Figur 5; und
- **Figur 7:**: eine perspektivische Ansicht einer Werkzeugmaschine mit einem horizontal und vertikal verfahrbaren Schlitten mit jeweils zwei Linearmotoren.

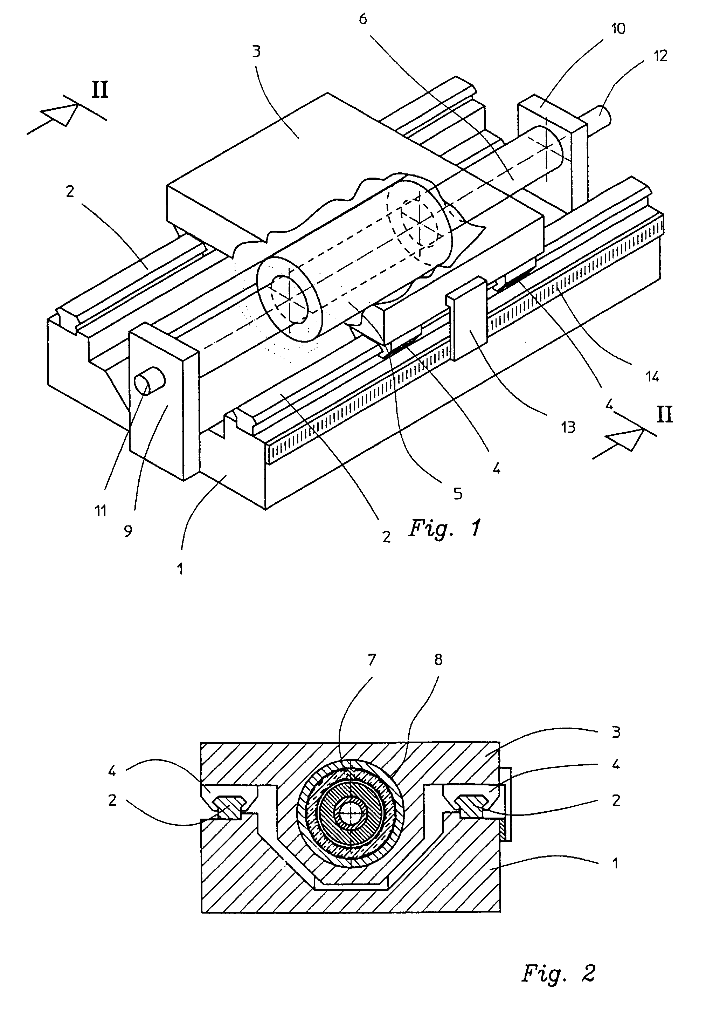

Wie aus den Figuren 1 und 2 ersichtlich, ist auf einem Maschinenkörper 1 eine Führungsanordnung in Form von zwei Linearführungen 2 angeordnet, die zur Längsverschiebung eines Werkzeugschlittens 3 dient, der den Führungsschienen 2 angepaßte Führungswagen 4 aufweist, von denen die Führungsschienen 2 spielfrei umfaßt sind. Der Schlitten 3 ist mit vier solchen Führungswagen 4 versehen.

Für den Antrieb in Längsrichtung der Führungsschienen 2 ist ein Linearmotor vorgesehen, der einen Primärteil 5 und einen Sekundärteil 6 umfaßt. Die Wicklungen im Primärteil sind senkrecht zur Bewegungsrichtung angeordnet und umgeben den rohrförmigen Sekundärteil 6 in Kreisform. Diese mit 7 bezeichneten Wicklungen sind innerhalb eines Motorgehäuses 8 angeordnet, welches in einer entsprechenden zentralen Bohrung des Schlittens 3 fest angeordnet ist. Der rohrförmige Sekundärteil 6 ist an beiden Enden in Festlagern 9 und 10 gehalten, die mit dem Maschinenkörper 1 fest verbunden sind. Um Wärmedehnungen des Sekundärteils 6 zu verhindern, sind an den Festlagern 9 und 10 Kühlmittelanschlüsse 11 und 12 vorgesehen, die eine Zu- bzw. Abführung von Kühlmitteln in das Innere des hohlen Sekundärteils gestatten und somit die Möglichkeit bieten, den Sekundärteil 6 soweit abzukühlen, daß entweder dieser spannungsfrei ist oder mit Vorspannung in den Festlagern 9 und 10 gehalten ist. Mit 13 und 14 sind ein Abtaster und ein Lineal eines linearen Wegmeßsystems bezeichnet.

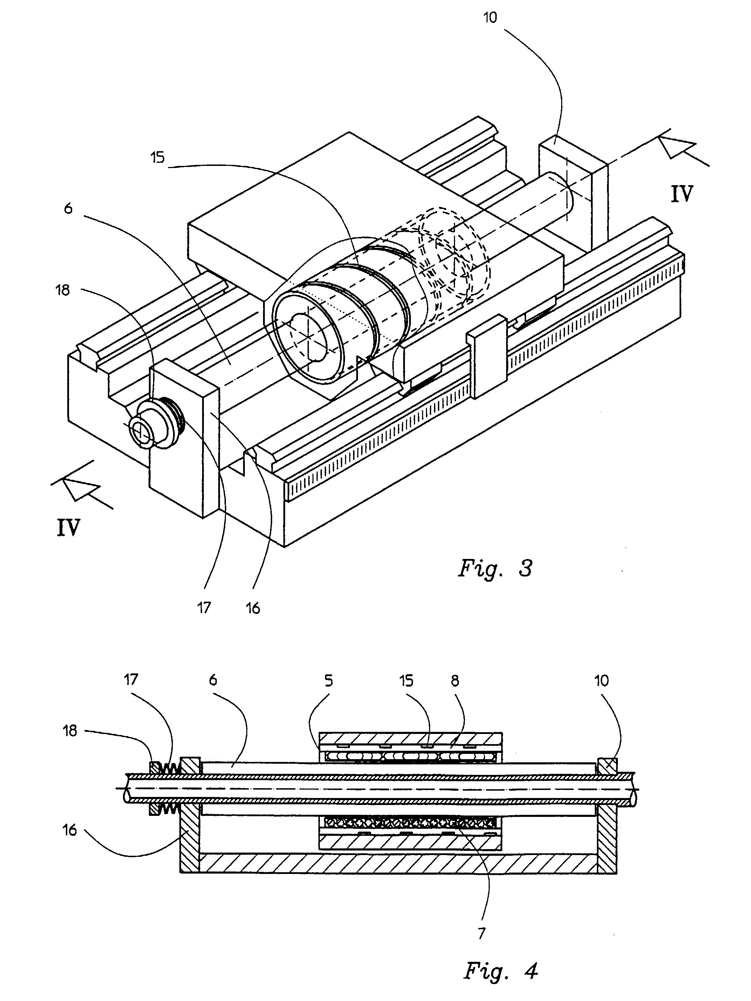

Die Figuren 3 und 4 zeigen den gleichen Werkzeugschlitten auf einem Maschinenkörper, so daß gleichbleibende Teile mit den gleichen Bezugszeichen versehen sind. Aus der Darstellung gemäß Figur 4 ist ersichtlich, daß innerhalb des Gehäuses 8 um die Wicklungen 7 herum ein schraubenlinienförmiger Kanal 15 für ein Kühlmittel vorgesehen ist, um die im Primärteil 5 erzeugte Wärme abzuführen. Der einzige Unterschied gegenüber der Ausgestaltung nach den Figuren 1 und 2 besteht darin, daß nur ein Festlager 10 für den Sekundärteil 6 vorgesehen ist, während das gegenüberliegende Ende des Sekundärteils in einem Loslager 16 gehalten ist, welches eine Längsausdehnung des Sekundärteils zuläßt, jedoch nur gegen die Wirkung einer Federanordnung 17, die sich zwischen einem mit dein Sekundärteil 6 fest verbundenen Flansch 18 und dem Loslager 16 abstützt.

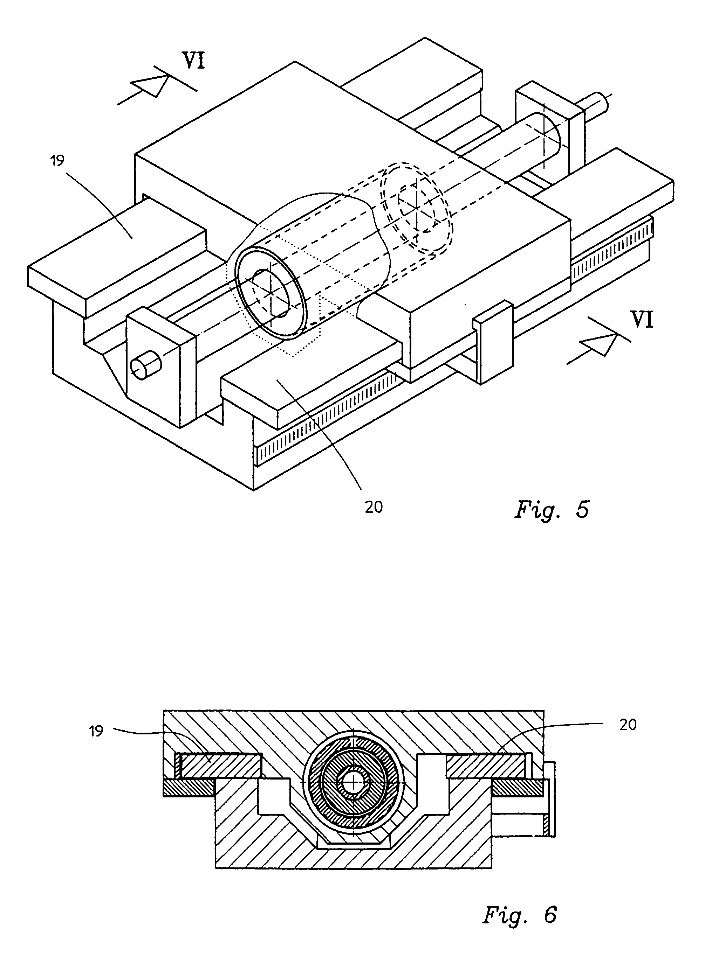

Die Ausführungsform nach den Figuren 5 und 6 entspricht bis auf eine geänderte Führungsanordnung derjenigen nach den Figuren 1 und 2. Im Gegensatz zu den Linearführungen 2 sind bei der Ausführungsform nach den Figuren 5 und 6 Flachführungen 19 und 20 vorgesehen. Bei der Flachführung 19 ist der Werkzeugschlitten 3 spielfrei gehalten, während die Flachführung 20 eine Ausdehnungsmöglichkeit des Schlittens quer zur Längsrichtung der Führungsschiene zuläßt.

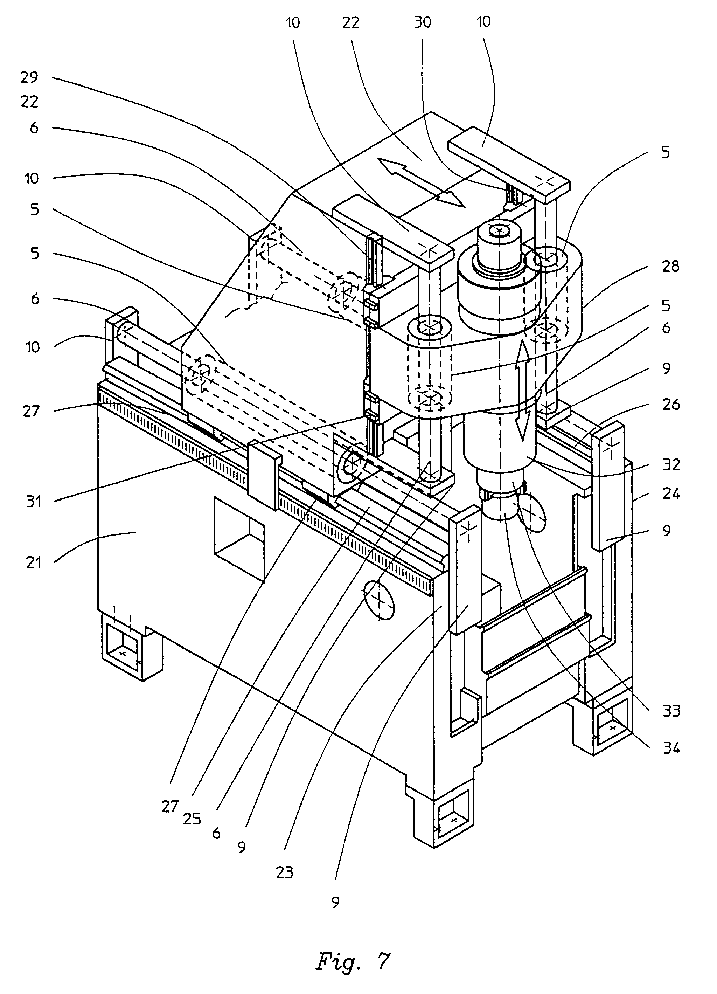

In Figur 7 ist in perspektivischer Darstellung eine Werkzeugmaschine angezeigt, die einen im wesentlichen H-förmigen Maschinenkörper 21, der auch U-förmig ausgebildet sein kann, und einen in horizontaler, d.h. in X-Richtung verfahrbaren Schlitten 22 umfaßt. Zur Führung des Schlittens 22 sind auf den nach oben stehenden Schenkeln 23 und 24 des Maschinenkörpers 21 Linearführungen 25 und 26 vorgesehen, an denen der Schlitten 22 mittels vier Führungswagen 27 verfahrbar ist. Die Linearführungen 25 und 26 und die Führungswagen 27 entsprechen der Ausgestaltung der Linearführungen gemäß Figur 1. Zur Verschiebung des Schlittens 22 entlang den Führungen 25 und 26 sind oberhalb der Führungsschienen 25 und 26 Sekundärteile 6 vorgesehen, die ebenso wie bei der Ausgestaltung nach Figur 1 in Festlagern 9 und 10 eingespannt sind, die mit den Schenkeln 23 und 24 des Maschinenkörpers 21 fest verbunden sind. Der jeweilige Primärteil 5 ist innerhalb des Schlittens 22 oberhalb der Führungswagen 27 angeordnet. Aufgrund der symmetrisch oberhalb der jeweiligen Führungsschienen angeordneten Linearmotoren ist eine verkantungsfreie Verschiebung des Schlittens 22 gewährleistet.

An dem Schlitten 22 ist in vertikaler Richtung, d.h. in Z-Richtung ein weiterer Schlitten 28 verfahrbar, der mittels Linearführungen 29 und 30 und Führungswagen 31 am Schlitten 22 geführt ist. wobei dieses Führungssystem entsprechend demjenigen gemäß Figur 1 ausgebildet ist. Parallel zu den Führungsschienen 29 und 30 sind mittels Festlager 9 und 10 zwei Sekundärteile 6 fest eingespannt, wie dies in Figur 1 gezeigt ist. Innerhalb des Schlittens 28 sind den jeweiligen Sekundärteilen 6 Primärteile 5 zugeordnet, so daß auch hier, wie bei dem Schlitten 22 eine verkantungsfreie Verschiebung möglich ist. Der Schlitten 28 trägt eine Motorspindel 32 mit einem Greiferfutter 33, in dem ein Werkstück 34 gespannt ist.

## Patentansprüche

1. Werkzeugmaschine mit einem an einer Führungsanordnung (2) eines Maschinenkörpers (1) geführten Schlitten (3) sowie einem für den Antrieb des Schlittens (3) dienenden, runden Linearmotor (5, 6), bei dem die senkrecht zur Bewegungsrichtung liegenden Wicklungen (7) des mit Kühleinrichtung (15) versehenen Primärteiles (5) in Kreisform angeordnet sind, und den aus einzelnen Blechscheiben zusammengesetzten, stangenförmigen Sekundärteil (6) gleichförmig mit engem Spalt umschließen, **dadurch gekennzeichnet,** daß der Primärteil (5) mit dem Schlitten (3) fest verbunden ist, daß der Sekundärteil (6) mit geringem Abstand zum Primärteil (5) parallel zu der Führungsanordnung (2) am Maschinenkörper (1) fest angeordnet ist und daß der Sekundärteil (6) an den Enden frei von Wärmespannungen gehalten ist.

2. Werkzeugmaschine nach Anspruch 1, **dadurch gekennzeichnet,** daß der Sekundärteil (6) an einem Ende fest in einem Festlager (10) und am anderen Ende in einem Loslager (16) gegen die Kraft einer Federanordnung (17) verschiebbar gehalten ist.

3. Werkzeugmaschine nach Anspruch 1 oder 2, **dadurch gekennzeichnet,** daß der Primärteil (5) innerhalb des Schlittens (3) angeordnet ist.

4. Werkzeugmaschine nach Anspruch 1, **dadurch gekennzeichnet,** daß die Kühleinrichtung für den Primärteil (5) einen schraubenförmig die Wicklung (7) umgebenden Kühlkanal (15) umfaßt.

5. Werkzeugmaschine nach einem der Ansprüche 1 bis 4, **dadurch gekennzeichnet,** daß der Sekundärteil (6) mit einer Kühleinrichtung versehen ist, die den Sekundärteil (6) frei von Wärmespannungen hält.

6. Werkzeugmaschine nach einem der Ansprüche 1 bis 5, **dadurch gekennzeichnet,** daß der Sekundärteil (6) als hohle, aus Lochblechscheiben zusammengesetzte Stange ausgebildet ist, die an ihren Enden jeweils mit einem Kühlmittelzuflußanschluß (11) bzw. einem Kühlmittelabflußanschluß (12) versehen ist.

## Claims

1. Machine tool with a carriage (3) guided on a guide assembly (2) of a machine body (1), and a round linear motor (5, 6) which serves to drive the carriage (3) and in which the coils (7) of the primary portion (5) provided with cooling device (15) are located perpendicularly to the direction of travel and arranged in a circle and surround the rod-shaped secondary portion (6) composed of individual metal discs, uniformly with a narrow gap, characterised in that the primary portion (5) is rigidly connected to the carriage (3), in that the secondary portion (6) is arranged rigidly on the machine body (1) parallel to the guide assembly (2) at a short distance from the primary portion (5) and in that the secondary portion (6) is kept free from thermal stresses at the ends.

2. Machine tool according to claim 1, characterised in that the secondary portion (6) is held at one end rigidly in a fixed bearing (10) and at the other end in a movable bearing (16) slidably against the force of a spring assembly (17).

3. Machine tool according to claim 1 or 2, characterised in that the primary portion (5) is arranged within the carriage (3).

4. Machine tool according to claim 1, characterised in that the cooling device for the primary portion (5) includes a cooling channel (15) helically surrounding the coil (7).

5. Machine tool according to any of claims 1 to 4, characterised in that the secondary portion (6) is provided with a cooling device which keeps the secondary portion (6) free from thermal stresses.

6. Machine tool according to any of claims 1 to 5, characterised in that the secondary portion (6) is constructed as a hollow rod which is composed of perforated metal discs and which at its ends is provided with a coolant inlet connection (11) or a coolant outlet connection (12) respectively.

## Revendications

1. Machine-outil comprenant un chariot (3) guidé sur un dispositif de guidage (2) d'un corps de machine (1), ainsi qu'un moteur linéaire rond (5, 6) servant pour l'entraînement du chariot (3), dans lequel les enroulements de la partie primaire (5) munie d'un dispositif de refroidissement (15), qui se trouvent perpendiculaires à la direction du déplacement sont agencés selon une forme circulaire et entourent uniformément, avec un léger écart, la partie secondaire (6) en forme de barre, composée de rondelles de tôle, caractérisée en ce que la partie primaire (5) est reliée solidairement au chariot (3), en ce que la partie secondaire (6) est disposée solidairement sur le corps (1) de la machine, à petite distance de la partie primaire (5), parallèlement au dispositif de guidage (2), et en ce que la partie secondaire (6) est maintenue aux extrémités libre de se dilater à la chaleur.

2. Machine-outil selon la revendication 1, caractérisée en ce que la partie secondaire (6) est tenue rigidement à une extrémité dans un support ferme (10) et, à l'autre extrémité, mobile en translation à l'encontre de la force d'un dispositif à ressort (17), dans un support lâche (16).

3. Machine-outil selon la revendication 1 ou 2, caractérisée en ce que la partie primaire (5) est disposée à l'intérieur du chariot (3).

4. Machine-outil selon la revendication 1, caractérisée en ce que le dispositif de refroidissement pour la partie primaire (5) comprend un canal de refroidissement (15) qui entoure l'enroulement (7) selon une forme hélicoïdale.

5. Machine-outil selon l'une des revendications 1 à 4, caractérisée en ce que la partie secondaire (6) est munie d'un dispositif de refroidissement qui maintient la partie secondaire (6) libre de se dilater à la chaleur.

6. Machine-outil selon l'une des revendications 1 à 5, caractérisée en ce que la partie secondaire (6) est réalisée sous la forme d'une barre creuse composée de rondelles de tôle perforées, et qui est munie à ses extrémités, respectivement d'un raccord d'arrivée de fluide de refroidissement (11) et d'un raccord de départ de fluide de refroidissement (12).
